# EUROPEAN PATENT SPECIFICATION

(11) **EP 0 849 143 B1**
(45) Date of publication and mention of the grant of the patent: **14.05.2003**
(21) Application number: 97121552.0
(22) Date of filing: 08.12.1997
(51) Int. Cl.: B62D 7/14, F16F 3/04

(54) **Spring-loaded mechanical expander with preset preloading and constant reference position**
Federgespannter, mechanischer Expander mit festgelegter Vorspannung und konstanter Referenz- Position
Expanseur mécanique chargé par ressort avec précontrainte déterminée et position de référence constant

(30) Priority: 17.12.1996 IT BO960665
(43) Date of publication of application: 24.06.1998
(73) Proprietor: R.C.D. S.r.l., 40069 Zola Predosa (Bologna) (IT)
(72) Inventor: Biondi, Armando, 40010 Sala Bolognese, (Prov. of Bologna) (IT)
(74) Representative: Modiano, Guido, Dr.-Ing.

(56) References cited:
- DE-A- 1 780 118
- GB-A- 781 403

## Description

The present invention relates to a spring-loaded mechanical expander with preset preloading and constant reference position. The expression "mechanical expander" is used to designate devices which are interposed between an actuation element and an actuated element and allow to absorb the action (force or moment) of the actuation element if the actuated element is blocked, or to transmit a force or moment which is lower than a preset value.

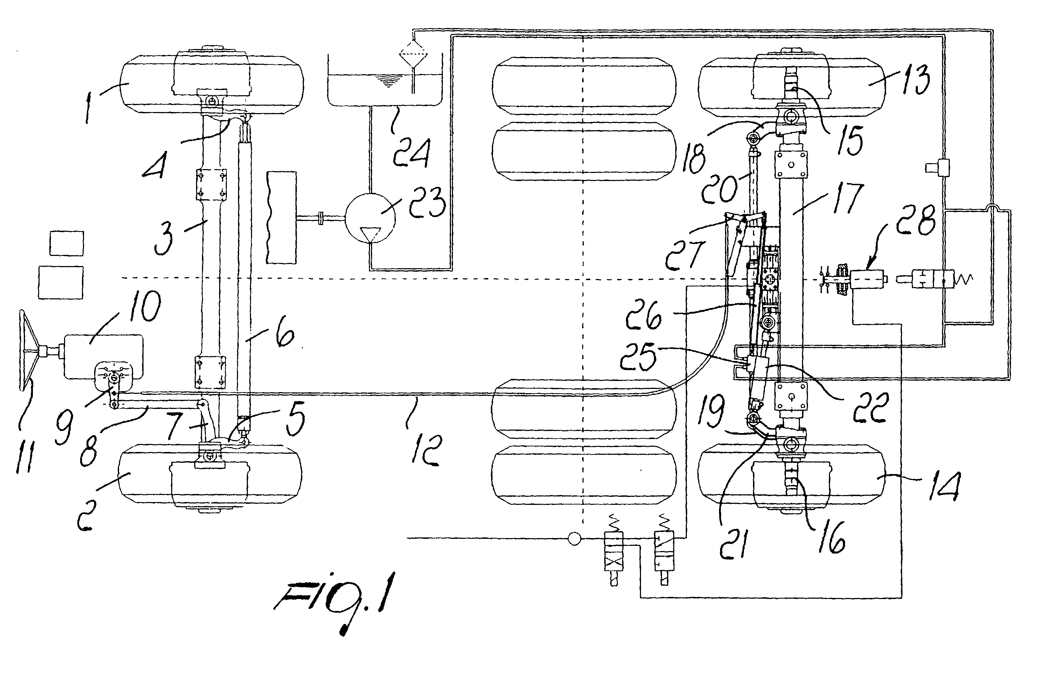

Expanders of this kind are used for example in the field of industrial vehicles. In order to better clarify the function of these expanders, reference is made hereinafter to two kinds of application, shown in figure 1 of the accompanying drawings, which is a diagram of a steering system of a motor vehicle which has a front axle and a rear axle, both of which have steered wheels.

In figure 1, the reference numerals 1 and 2 designate the two leading wheels of a motor vehicle which has power-assisted steering on the front axle. The wheels 1 and 2 are mounted so that they can be orientated on an axle 3 and can be steered by means of a four-sided articulated linkage system which is composed of two arms 4, 5 which are mutually connected by a transverse bar 6. A second arm 7 is rigidly coupled to the arm 5 and is connected, by means of a traction element 8, to the actuation lever 9 of a hydraulic steering system, generally designated by the reference numeral 10, which is capable of producing the oscillation of the lever 9 in one direction or the other when the steering wheel 11 is operated.

A flexible cable 12 is articulated in a median point of the lever 9 and actuates the steering of the wheels 13, 14 of the rear axle. The wheels 13, 14 can rotate about respective pivots 15, 16 which are articulated to the opposite ends of the beam 17 that constitutes the rear axle.

Two respective arms 18, 19 are rigidly coupled to the pivots 15, 16 and are mutually connected by a bar 20 which forms the four-sided steering linkage system together with said arms. A further arm 21 is rigidly coupled to the pivot 16 above the arm 19. A jack 22 acts between said arm 21 and the beam 17 and its chambers can be connected to a pump 23 for feeding pressurized oil and to the discharge 24 by means of a distributor 25. The distributor 25 is controlled, by means of a rod 26 and a lever (actuation element) 27 which is pivoted in a rocker-like manner, by the flexible cable 12. In this manner, by actuating the steering wheel 11 in one direction or the other, a slide valve of the distributor 25 is moved in the corresponding steering direction of the rear wheels 13, 14.

The reference numeral 28 designates a device for locking the rear wheels, which is activated when one wishes the rear wheels to remain orientated in the straight-line travel direction. A device of this kind is described for example in Italian patent applications no. BO92A000327, BO95A000029 and European Patent Applications No. 95117082.8, 97100704.2 and 97118171.4.

In order to prevent the locking of the rear wheels from disallowing the steering of the front wheels 1 and 2 by providing an inextensible connection between the flexible cable and the slide valve of the distributor (driven element) 25, the rod 26 is constituted by a linear expander, i.e., by an element which is adapted to shorten and extend in order to allow the sliding of the cable 12. A normal linear expander of the elastic type, however, would not allow to achieve a constant position to which the strokes of the slide valve 25 could be referred in order to precisely and repeatably actuate the steering of the rear wheels.

The aim of the present invention is therefore to provide an expander which is structured so as to behave like a rigid transmission element up to a preset value of the transmitted force and like an elastic element when said value is exceeded.

Within the scope of this aim, an object of the present invention is to provide an expander which, while using the same inventive concept, can be provided as a linear expander or as a rotary expander according to the requirements.

This aim, this object and others which will become apparent hereinafter are achieved with an expander whose characteristics are defined in the appended claims.

Embodiments of the present invention will become apparent from the following detailed description on the basis of the accompanying drawings, wherein:
figure 1 is a diagram of a steering system of a motor vehicle;
figure 2 is a sectional view of a linear expander according to the present invention, taken along a longitudinal plane;
figure 3 is a longitudinal sectional view of a rotary-type expander according to the present invention;
figure 4 is a sectional view, taken along the plane IV-IV of figure 3;
figure 5 is a sectional view, taken along the plane V-V of figure 3;
figure 6 is a diagram of a steering system of a motor vehicle provided with a front axle and a rear axle, both of which have steered wheels, and with a rotary-type expander.

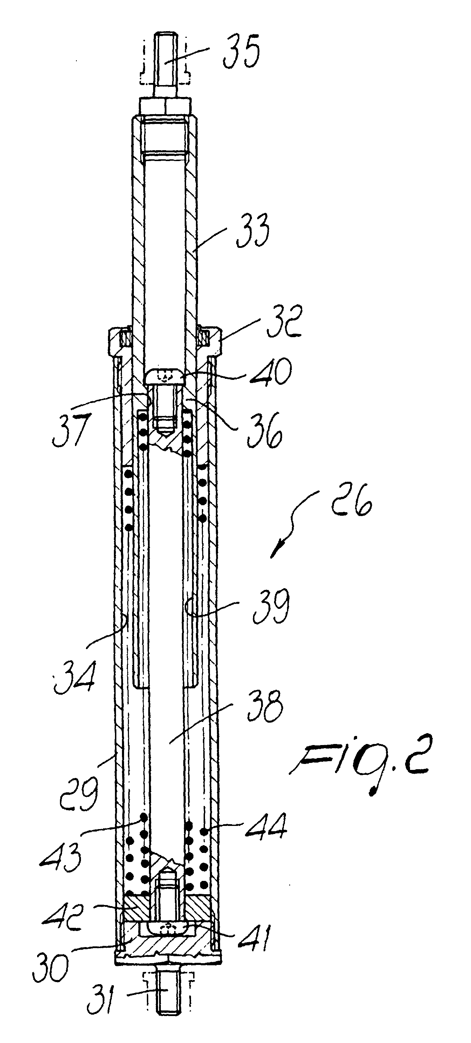

With reference to figure 2, the expander 26 of the example of figure 1 is constituted by an outer cylinder (second element) 29 which is closed at one end by an end plate 30 provided with a threaded stem 31 for coupling to the slide valve of the distributor 25.

A bush 32 is screwed into the cylinder 29 and slidingly supports a tubular stem (first element) 33, the outer wall of which is spaced from the inner wall of the cylinder 29 so as to form an interspace 34.

The tubular stem 33 has, at the end located outside the cylinder 29, a threaded stem 35 for coupling to an arm of the lever (actuation element) 27.

Inside the stem 33, in an intermediate position, there is a collar 36 which forms a seat 37 for guiding a rod 38 which lies coaxially within the tubular stem 33 and delimits, together with said stem, a tubular interspace 39 located inside the interspace 34.

Two bolts 40, 41 are screwed to the opposite ends of the rod (third element) 38; their heads for respective shoulders. The head of the bolt 40 is meant to abut against the collar 36, while the head of the bolt 41 acts as resting element for a ring 42 which is guided in the cylinder 29 externally and on the rod 38 internally.

The ring 42 is kept rested on the head of the bolt 41 and on the end plate 30 by means of a pair of mutually concentric springs (first and second elastic means) 43, 44, the opposite ends of which abut respectively against the collar 36 and against the edge of the bush 32.

From the above description it is thus evident that by preloading the springs 43, 44 with a preset expansion force, the expander 26 maintains a stable reference condition as long as the preloading of the springs 43, 44 is greater than the compression or traction force that acts between the stems 31, 35. Any compressive stresses of the expander in excess of the preloading of the spring 43 in fact cause the retraction of the tubular stem 33 into the cylinder 29. Likewise, pulling stresses of the expander in excess of the preloading of the spring 44 cause the stem 33 to protrude from the cylinder 29. In any case, when all stresses in excess of the preloading of the springs 43, 44 cease, the expander regains a constant length, which is set by the abutment of the ring 42 against the end plate 30 and against the head of the bolt 41, causing the extension of the rod 38 and of the tubular stem 33.

By using the same inventive concept, it is possible to provide an expander which operates with a rotary effect instead of a linear action.

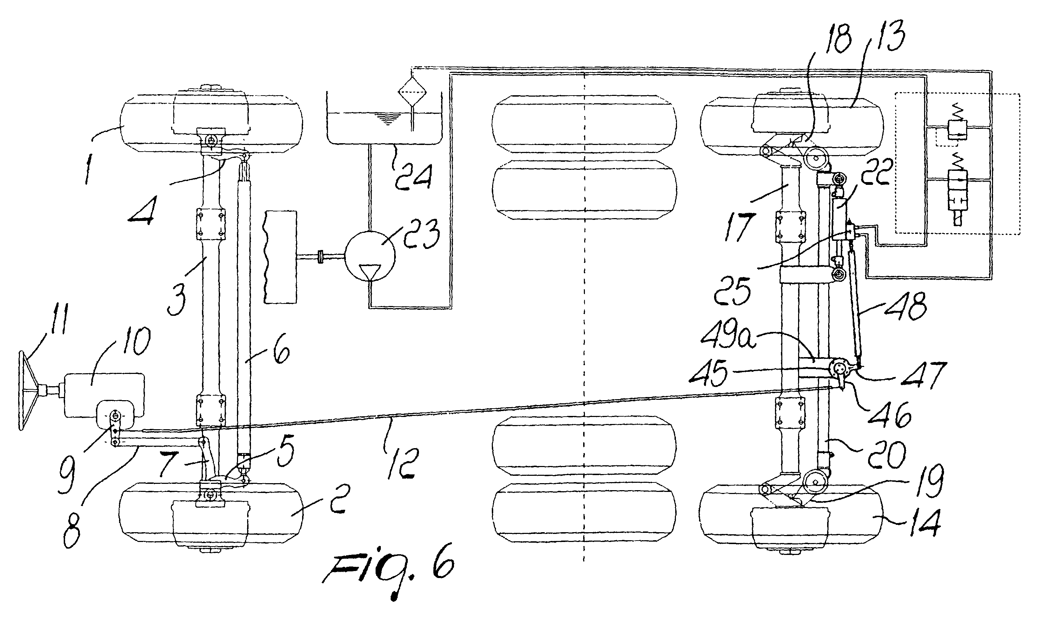

An example of such a rotary expander is shown in figure 6 in an application to a vehicle of the type described above with reference to figure 1 and whereof identical or functionally similar components have been designated by the same reference numerals in figure 6.

In figure 6, the rotary expander is generally designated by the reference numeral 45 and comprises a first radial lever (actuation element) 46, which is connected to the flexible cable 12, and a second radial lever (driven element) 47, which is connected to the slide valve of the distributor 25 by means of a traction element 48. The radial arms 46 and 47 maintain their constant angular position up to a certain value of the traction force applied by the flexible cable 12. When the rear wheels 13, 14 are blocked, so that the arm 47 cannot rotate, the arm 46 can perform angular strokes in both directions of rotation with respect to the intermediate position.

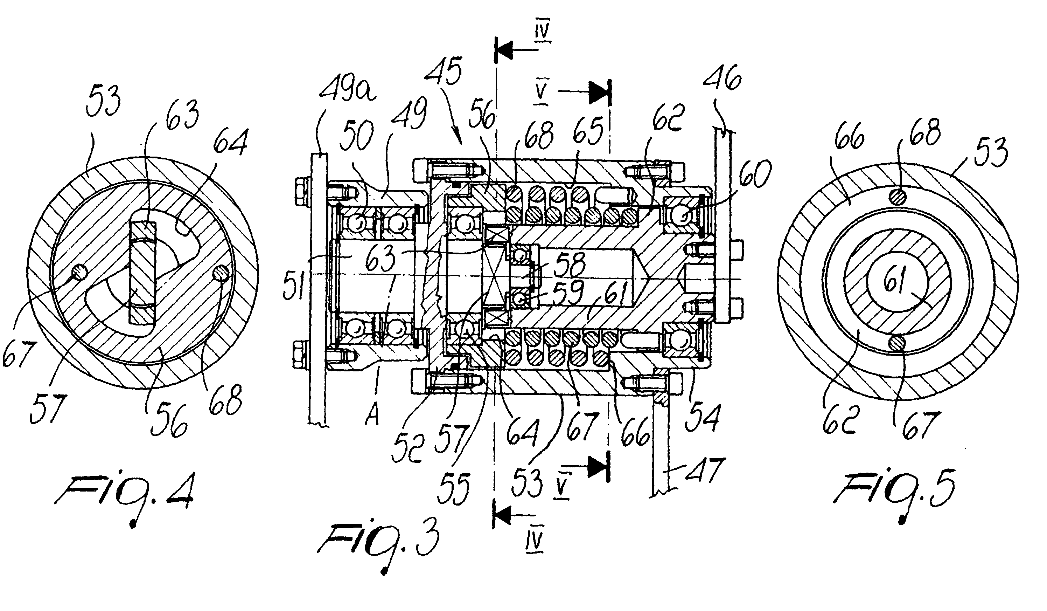

The rotary expander 45, see figures 3-5, is constituted by a bush 49 fixed to a bracket 49a which is rigidly coupled to the beam 17 of the rear axle. A shaft 51 is rotatably supported in the bush 49 by means of bearings 50 and forms a flange 52 which lies outside the bush 49.

A cylindrical body 53 is centered and fixed in the flange 52 and has, at the end that lies opposite to the flange 52, a tubular axial extension 54 for the centering of the lever 47, which is fixed frontally to the body 53.

The shaft (first element) 51 lies axially inside the body 53 and supports, adjacent to flange 52, by means of a bearing 55, a disk (third element) 56. Proximate to the bearing 55, the shaft 51 has two diametrically opposite chamfers which form a diametrical key 57. The shaft 51 extends, from said key 57, with an axial tang 58. A hollow shaft (second element) 61 is supported so that it can rotate on the tang 58 and in the tubular extension 54 of the body 53 by means of bearings 59, 60 and is provided with a peripheral collar 62. Said hollow shaft 61 has an end which protrudes outside the tubular extension 54 and to which the lever 46 is fixed frontally.

At the end that lies opposite to the arm 46, the hollow shaft 61 has two diametrically opposite axial teeth 63, between which the key 57 lies.

The key 57 and the axial teeth 63 have the same thickness and are inserted in an opening 64 of the disk 56 which is shaped like an hourglass. The opening 64 is in fact composed of two substantially triangular slots which are mutually opposite with respect to the axis A of the shaft 61 and mutually intersect in order to allow the insertion of the key 57 at the center and allow said key and the teeth 63 to perform angular strokes inside the opening 64.

A tubular chamber 65 is formed between the body 53 and the hollow shaft 61 and is delimited axially on one side by the disk 56 and on the opposite side by the collar 62 and by a shoulder 66 of the body 53.

Two concentric springs (first and second elastic means) 67, 68 are accommodated in the chamber 65: the opposite ends of the outer spring 68 are rigidly coupled in the shoulder 66 of the body 53 and in the disk 56, while the opposite ends of the inner spring 67 are rigidly coupled in the collar 62 and in the disk 56.

In the inactive condition, the springs 67, 68 keep the teeth 63 and the key 57 in abutment against the same sides of the opening 64, as shown in figure 4. The spring 68, by acting between the body 53 and the disk 56, in fact actuates said disk into abutment against the key 57. At the same time the spring 67, by acting between the disk 56 and the hollow shaft 61, actuates the axial teeth 63 into abutment against the disk 65. The thrust with which the teeth 62 and the key 57 press against the sides of the opening 64 is determined by the preloading of the springs 67, 68.

Therefore, during operation, as long as the preloading force is not exceeded, the levers 46, 47 maintain their angular position and the expander 45 behaves like a two-arm lever. On the other hand, when the rear axle is blocked in the straight-line travel position, the action of the cable 12 in one direction or the other causes the simple rotation of the body 53 with respect to the shaft 61, allowing the lever 46 to perform angular strokes with respect to the lever 47.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A spring-loaded mechanical expander with preset preloading and constant reference position, **characterized in that** it comprises: a first element (33; 51) and a second element (29; 61), which are connected to an actuation element (9-12, 27; 9-12, 46) and to a driven element (25; 47, 48, 25), said first and second elements (33, 29; 51, 61) being movable with respect to each other; a third element (38; 56), which is operatively associated with said first element (33; 51) and can be moved from a reference position, which is stable with respect to said first element (33; 51) and said second element (29; 61), into a position which is variable with respect to one of said first (33; 51) and second (29; 61) elements; first elastic means (43; 68), which are interposed between said first element (33; 51) and said third element (38; 56), and second elastic means (44; 67), which are interposed between said third element (38; 56) and said second element (29; 61), said first and second elastic means (43, 44; 67, 68) being subjected to a preloading force which is determined so as to keep said first element (33; 51) and said second element (29; 61) motionless with respect to each other and in abutment against said third element (38; 56) in said stable reference position when said first element (33; 51) is subjected to a stress, with respect to said second element (29; 61), with a force which is lower than said preloading force and so as to allow said first element (33; 51) to move with respect to said second element (29; 61), with a movement of said third element (38; 56) into said variable position when said first element (33; 51) and said second element (29; 61) are mutually subjected to a stress with a force that exceeds the preloading force.

2. A mechanical expander according to claim 1, **characterized in that** said first element (33) comprises a tubular stem (33), inside which a rod (38) is guided, said rod constituting said third element (38) and having, at one end, an abutment (40) and, at the opposite end, a ring (42); and **in that** said second element is constituted by a cylinder (29), which is guided on said tubular stem (33) and on said ring (42), a first spring (43) and a second spring (44) being provided which act respectively by compression between said tubular stem (33) and said ring (42) and between said ring (42) and said cylinder (29).

3. A mechanical expander according to claim 2, **characterized in that** it comprises: an external cylinder (29), which is closed at one end by an end plate (30) which has a threaded tang (31) for coupling to a driven element (25); a bush (32), which is screwed into said cylinder (29); a tubular stem (33), which is slidingly supported in said bush (32), the outer wall of said stem (33) being spaced from the inner wall of said cylinder (29), so as to form a first interspace (34), said tubular stem (33) having, at its end located outside the cylinder, a threaded stem (35) for coupling to an actuation element (9-12, 27) and internally having, in an intermediate position, a collar (36) which forms a guiding seat (37) for a rod (38) which lies coaxially in the tubular stem (33) and delimits, together with said stem, a tubular interspace (39) which lies inside said first interspace (34); respective shoulders (40, 41) being provided at the opposite ends of said rod (38) and being meant to abut against said collar (36) and act as resting element for a ring (42) which is guided in the cylinder (29); said ring (42) being kept rested on the respective shoulder (41) and on the end plate (30) of the outer cylinder (29) by means of two mutually concentric springs (43, 44), the opposite ends of which abut against said collar (36) and against the edge of said bush (32) respectively.

4. An expander according to claim 1, **characterized in that** said first element comprises: a first shaft (51) which is supported, so that it can rotate, on the rear steering axle; and a cylindrical tubular body (53), which is fixed coaxially to said first shaft (51) and to which said driven element (47; 48, 25) is connected; a disk (56), which is rotatably supported on said shaft (51) inside said body (53); a diametrical key-shaped element (57) formed on said first shaft (51); a second hollow shaft (61), which is rotatably supported in said body (53) coaxially to said first shaft (51), said second shaft (61) having an end which protrudes outside said body (53) and to which said actuation element (9-12, 46) is frontally fixed, the opposite end having two diametrically opposite axial teeth (63) between which said key (57) lies; said key (57) and said axial teeth (63) being inserted in an opening (64) of said disk (56) which is shaped like an hourglass with two substantially triangular slots, which are mutually opposite with respect to the axis (A) of said first shaft (51) and mutually intersect so as to allow the insertion of said key (57) at the center of said opening (64) and allow said key (57) and said axial teeth (63) to perform angular strokes inside said opening; a tubular chamber (65) being formed between said tubular body (53) and said second shaft (61) in order to accommodate two concentric torsion springs (67, 68), the opposite ends of said outer spring (68) being rigidly coupled in said body (53) and in said disk (56), the opposite ends of said inner spring (67) being rigidly coupled to said second hollow shaft (61) and to said disk (56); said springs (67, 68) being preloaded, so as to keep said key (57) and said axial teeth (63) in abutment in said opening (64), so as to form said stable reference position when said tubular body (53) is subjected to stress with respect to said second shaft (61) with a torque which is smaller than said preloading force and so as to allow the rotation of said tubular body (53) with respect to said second shaft (61), with a rotation of said disk (56) in said variable position when said tubular body (53) and said second shaft (61) are subjected to stress with respect to each other with a torque which is greater than the preloading force.

5. A mechanical expander according to claim 4, **characterized in that** said first shaft (51) has a tang-shaped extension (58) for supporting said second shaft (61).

6. A mechanical expander according to claim 5, **characterized in that** said second shaft (61) has an external collar (62) for coupling one end of said internal torsion spring (67).

## Patentansprüche

1. Federgespannter mechanischer Expander mit festgelegter Vorspannung und konstanter Referenzposition, **dadurch gekennzeichnet, daß** er enthält: ein erstes Element (33; 51) und ein zweites Element (29; 61), die mit einem Betätigungselement (9-12, 27; 9-12, 46) und mit einem angetriebenen Element (25; 47, 48, 25) verbunden sind, wobei das erste und das zweite Element (33, 29; 51, 61) relativ zueinander bewegbar sind; ein drittes Element (38; 56), das wirkungsmäßig mit dem ersten Element (33, 51) in Verbindung steht und aus einer bezüglich des ersten Elements (33; 51) und des zweiten Elements (29; 61) stabilen Referenzposition in eine Position bewegbar ist, in der es bezüglich des ersten Elements (33; 51) oder des zweiten Elements (29; 61) variabel ist; erste elastische Mittel (43; 68), die zwischen dem ersten Element (33; 51) und dem dritten Element (38; 56) angeordnet sind, und zweite elastische Mittel (44; 67), die zwischen dem dritten Element (38; 56) und dem zweiten Element (29; 61) angeordnet sind, wobei die ersten und die zweiten elastischen Mittel (43, 44; 67; 68) einer Vorspannkraft ausgesetzt sind, die so festgelegt ist, daß sie das erste Element (33; 51) und das zweite Element (29; 61) zueinander unbeweglich und in Anlage gegen das dritte Element (38; ⁵⁶) in der stabilen Referenzposition hält, wenn das erste Element (33; 51) einer Belastung gegenüber dem zweiten Element (29; 61) mit einer Kraft ausgesetzt ist, die kleiner ist als die Vorspannkraft, so daß es dem ersten Element (33; 51) möglich ist, sich relativ zu dem zweiten Element (29; 61) zu bewegen, wobei sich das dritte Element (38; 56) in die variable Position bewegt, wenn das erste Element (33; 51) und das zweite Element (29; 61) beide einer Belastung mit einer Kraft ausgesetzt sind, die größer ist als die Vorspannkraft.

2. Mechanischer Expander nach Anspruch 1, **dadurch gekennzeichnet, daß** das erste Element (33) einen rohrförmigen Schaft (33) enthält, in dem ein Stab (38) geführt ist, wobei der Stab das dritte Element (38) darstellt und an einem Ende einen Anschlag (40) und an dem anderen Ende einen Ring (42) hat; und daß das zweite Element aus einem Zylinder (29) besteht, der auf dem rohrförmigen Schaft (33) und auf dem Ring (42) geführt ist, wobei eine erste Feder (43) und eine zweite Feder (44) vorgesehen sind, die jeweils durch Kompression zwischen dem rohrförmigen Schaft (33) und dem Ring (42) und zwischen dem Ring (42) und dem Zylinder (29) wirken.

3. Mechanischer Expander nach Anspruch 2, **dadurch gekennzeichnet, daß** er enthält: einen äußeren Zylinder (29), der an einem Ende durch eine Endplatte (30) geschlossen ist, die einen mit einem Gewinde versehenen Mitnehmer (31) zum Koppeln an ein angetriebenes Element (25) hat; eine Buchse (32), die in den Zylinder (29) geschraubt ist; einen rohrförmigen Schaft (33), der gleitend in der Buchse (32) gelagert ist, wobei die Außenwand des Schafts (33) von der Innenwand des Zylinders (29) beabstandet ist, so daß ein erster Zwischenraum (34) gebildet wird, wobei der rohrförmige Schaft (33) an seinem außerhalb des Zylinders liegenden Ende einen Gewindeschaft (35) zum Koppeln mit einem Betätigungselement (9-12, 27) und innen, in einer Zwischenposition, einen Bund (36) hat, der einen Führungssitz (37) für einen Stab (38) bildet, der koaxial in dem rohrförmigen Schaft (33) liegt und zusammen mit dem Schaft einen rohrförmigen Zwischenraum (39) begrenzt, welcher in dem ersten Zwischenraum (34) liegt; wobei jeweilige Schultern (40, 41) an den einander abgewandten Enden des Stabs (38) vorgesehen sind und dazu dienen, gegen den Bund (36) anzustoßen und als Anlageelemente für einen Ring (42) zu dienen, der in dem Zylinder (29) geführt ist; wobei der Ring (42) mittels zweier zueinander konzentrischer Federn (43, 44), deren einander abgewandte Enden gegen den Bund (36) bzw. gegen die Kante der Buchse (32) anstoßen, in Anlage auf der jeweiligen Schulter (41) und der Endplatte (30) des äußeren Zylinders (29) gehalten wird.

4. Expander nach Anspruch 1, **dadurch gekennzeichnet, daß** das erste Element umfaßt: eine erste Welle (51), die drehbar an der hinteren Lenkachse gelagert ist; und einen zylindrischen rohrförmigen Körper (53), der koaxial zu der ersten Welle (51) angebracht ist und mit dem das angetriebene Element (47; 48, 25) verbunden ist; eine Scheibe (56), die in dem Körper (53) drehbar auf der Welle (51) gelagert ist; ein diametrales keilförmiges Element (57), das an der ersten Welle (51) ausgebildet ist; eine zweite, hohle Welle (61), die koaxial zu der ersten Welle (51) drehbar in dem Körper (53) gelagert ist, wobei die zweite Welle (61) ein Ende hat, das aus dem Körper (53) hinausragt und an dem das Betätigungselement (9-12, 46) frontal befestigt ist, wobei das andere Ende zwei diametral entgegengesetzte axiale Zähne (63) hat, zwischen denen der Keil (57) liegt; wobei der Keil (57) und die axialen Zähne (63) in eine Öffnung (64) der Scheibe (56) eingeführt sind, die wie eine Sanduhr mit zwei im wesentlichen dreieckigen Schlitzen geformt ist, welche einander bezüglich der Achse (A) der ersten Welle (51) gegenüberliegen und sich schneiden, um das Einführen des Keils in der Mitte der Öffnung (64) zu ermöglichen und um dem Keil (57) und den axialen Zähnen (63) das Durchführen von Winkelbewegungen in der Öffnung zu erlauben; wobei eine rohrförmige Kammer (65) zwischen dem rohrförmigen Körper (53) und der zweiten Welle (61) gebildet ist, um zwei konzentrische Torsionsfedern (67, 68) aufzunehmen, wobei die einander abgewandten. Enden der äußeren Feder (68) starr in dem Körper (53) und in der Scheibe (56) gekoppelt sind und die einander abgewandten Enden der inneren Feder (67) starr an die zweite, hohle Welle (61) und an die Scheibe (56) gekoppelt sind; wobei die Federn (67, 68) derart vorgespannt sind, daß sie den Keil (57) und die axialen Zähne (63) in Anlage in der Öffnung (64) halten, um die stabile Referenzposition zu bilden, wenn der rohrförmige Körper (53) bezüglich der zweiten Welle (61) einer Belastung mit einem Drehmoment ausgesetzt ist, das kleiner ist als die Vorspannkraft, und um die Drehung des rohrförmigen Körpers (53) relativ zu der zweiten Welle (61) zu ermöglichen, mit einer Drehung der Scheibe (56) in die variable Position, wenn der rohrförmige Körper (53) und die zweite Welle (61) einer Belastung relativ zueinander ausgesetzt sind, mit einem Drehmoment, das größer ist als die Vorspannkraft.

5. Mechanischer Expander nach Anspruch 4, **dadurch gekennzeichnet, daß** die erste Welle (51) eine Mitnehmer-förmige Verlängerung (58) zum Lagern der zweiten Welle (61) hat.

6. Mechanischer Expander nach Anspruch 5, **dadurch gekennzeichnet, daß** die zweite Welle (61) einen externen Bund (62) zum Koppeln mit einem Ende der inneren Torsionsfeder (67) hat.

## Revendications

1. Expanseur mécanique à ressort avec une précharge prédéterminée et une position de référence constante,
**caractérisé en ce qu'**il comprend : un premier élément (33 ; 51) et un deuxième élément (29 ; 61), qui sont reliés à un élément d'actionnement (9 - 12, 27 ; 9 - 12, 46) et à un élément entraîné (25 ; 47, 48, 25), lesdits premier et deuxième éléments (33, 29 ; 51, 61) étant mobiles l'un par rapport à l'autre ; un troisième élément (38 ; 56), qui est associé de façon fonctionnelle audit premier élément (33, 51) et peut être déplacé d'une position de référence, qui est stable par rapport audit premier élément (33, 51) et audit deuxième élément (29 ; 61), dans une position qui est variable par rapport à l'un desdits premier (33 ; 51) et deuxième (29 ; 61) éléments ; des premiers moyens élastiques (43 ; 68), qui sont disposés entre ledit premier élément (33 ; 51) et ledit troisième élément (38 ; 56), et des seconds moyens élastiques (44 ; 67), qui sont disposés entre ledit troisième élément (38 ; 56) et ledit deuxième élément (29 ; 61), lesdits premier et second moyens élastiques (43, 44 ; 67, 68) étant soumis à une force de précharge qui est déterminée de façon à maintenir lesdits premier élément (33 ; 51) et deuxième élément (29 ; 61) immobiles l'un par rapport à l'autre et en butée contre ledit troisième élément (38 ; 56) dans ladite position de référence stable quand ledit premier élément (33 ; 51) est soumis à un effort, par rapport audit deuxième élément (29 ; 61), avec une force qui est inférieure à ladite force de précharge, et de façon à permettre audit premier élément (33; 51) de se déplacer par rapport audit deuxième élément (29 ; 61), avec un mouvement dudit troisième élément (38 ; 56) dans ladite position variable quand ledit premier élément (33 ; 51) et ledit deuxième élément (29 ; 61) sont mutuellement soumis à un effort avec une force qui excède la force de précharge.

2. Expanseur mécanique selon la revendication 1,
**caractérisé en ce que** ledit premier élément (33) comprend une tige tubulaire (33), à l'intérieur de laquelle une tige (38) est guidée, ladite tige constituant ledit troisième élément (38) et ayant, à une extrémité, une butée (40) et, à l'autre extrémité, une bague (42) ; et **en ce que** ledit deuxième élément est constitué par un cylindre (29), qui est guidé sur ladite tige tubulaire (33) et sur ladite bague (42), un premier ressort (43) et un second ressort (44) étant prévus qui agissent respectivement par compression entre ladite tige tubulaire (33) et ladite bague (42) et entre ladite bague (42) et ledit cylindre (29).

3. Expanseur mécanique selon la revendication 2,
**caractérisé en ce qu'**il comprend : un cylindre externe (29), qui est fermé à une extrémité par une plaque d'extrémité (30) qui a un embout fileté (31) pour s'accoupler à un élément entraîné (25) ; une douille (32), qui est vissée dans ledit cylindre (29) ; une tige tubulaire (33), qui est supportée de façon coulissante dans ladite douille (32), la paroi externe de ladite tige (33) étant espacée de la paroi interne dudit cylindre (29), de façon à former un premier espace (34), ladite tige tubulaire (33) ayant, à son extrémité située à l'extérieur du cylindre, une tige filetée (35) pour s'accoupler à un élément d'actionnement (9 - 12, 27) et intérieurement ayant, dans une position intermédiaire, un collet (36) qui forme une portée de guidage (37) pour une tige (38) qui se trouve coaxialement dans la tige tubulaire (33) et délimite, en même temps que ladite tige, un espace tubulaire (39) qui se trouve à l'intérieur dudit premier espace (34) ; des épaulements respectifs (40, 41) étant prévus aux extrémités opposées de ladite tige (38) et étant destinés à venir en butée contre ledit collet (36) et agissent comme élément d'appui pour une bague (42) qui est guidée dans le cylindre (29) ; ladite bague (42) étant maintenue appuyée sur l'épaulement respectif (41) et sur la plaque d'extrémité (30) du cylindre externe (29) par l'intermédiaire de deux ressorts mutuellement concentriques (43, 44), dont les extrémités opposées butent contre ledit collet (36) et contre le bord de ladite douille (32) respectivement.

4. Expanseur selon la revendication 1,
**caractérisé en ce que** ledit premier élément comprend : un premier arbre (51) qui est supporté, de sorte qu'il peut tourner, sur l'essieu directeur arrière ; et un corps tubulaire cylindrique (53), qui est fixé coaxialement audit premier arbre (51) et auquel ledit élément entraîné (47 ; 48 et, 25) est relié ; un disque (56), qui est supporté de façon rotative sur ledit arbre (51) à l'intérieur dudit corps (53) ; un élément en forme de clavette diamétrale (57) formé sur ledit premier arbre (51) ; un second arbre creux (61), qui est supporté de façon rotative dans ledit corps (53) coaxialement audit premier arbre (51), ledit second arbre (61) ayant une extrémité qui fait saillie à l'extérieur dudit corps (53) et auquel ledit élément d'actionnement (9 - 12, 46) est fixé frontalement, l'extrémité opposée ayant deux dents axiales diamétralement opposées (63) entre lesquelles ladite clavette (57) se trouve ; ladite clavette (57) et lesdites dents axiales (63) étant insérées dans une ouverture (64) dudit disque (56) laquelle est conformée comme un sablier ayant deux fentes sensiblement triangulaires, qui sont mutuellement opposées par rapport à l'axe (A) dudit premier arbre (51) et se coupent mutuellement de façon à permettre l'insertion de ladite clavette (57) au centre de ladite ouverture (64) et à permettre à ladite clavette (57) et auxdites dents axiales (63) de réaliser des courses angulaires dans ladite ouverture ; une chambre tubulaire (65) étant formée entre ledit corps tubulaire (53) et ledit second arbre (61) pour recevoir deux ressorts de torsion concentriques (67, 68), les extrémités opposées dudit ressort externe (68) étant rigidement couplées dans ledit corps (53) et dans ledit disque (56), les extrémités opposées dudit ressort interne (67) étant rigidement couplées audit second arbre creux (61) et audit disque (56) ; lesdits ressorts (67, 68) étant préchargés, de façon à maintenir ladite clavette (57) et lesdites dents axiales (63) en butée dans ladite ouverture (64), de façon à constituer ladite position de référence stable quand ledit corps tubulaire (53) est soumis à un effort par rapport audit second arbre (61) avec un couple qui est inférieur à ladite force de précharge et de façon à permettre la rotation dudit corps tubulaire (53) par rapport audit second arbre (61), avec une rotation dudit disque (56) dans ladite position variable quand ledit corps tubulaire (53) et ledit second arbre (61) sont soumis à un effort l'un par rapport à l'autre avec un couple qui est supérieur à la force de précharge.

5. Expanseur mécanique selon la revendication 4,
**caractérisé en ce que** ledit premier arbre (51) présente une extension en forme d'embout (58) pour supporter ledit second arbre (61).

6. Expanseur mécanique selon la revendication 5,
**caractérisé en ce que** ledit second arbre (61) a un collet externe (62) pour coupler une extrémité dudit ressort de torsion interne (67).
